(19) Europäisches Patentamt / European Patent Office / Office européen des brevets

(11) **EP 3 798 258 A2**

(12) **EUROPEAN PATENT APPLICATION**

(43) Date of publication:
**31.03.2021 Bulletin 2021/13**

(51) Int Cl.:
**C08L 7/00** (2006.01)     **C08L 9/00** (2006.01)
**C08L 9/06** (2006.01)     **C08L 57/02** (2006.01)

(21) Application number: **20193281.1**

(22) Date of filing: **28.08.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2019 JP 2019177638**

(71) Applicant: **Sumitomo Rubber Industries, Ltd.**
**Kobe-shi, Hyogo 651-0072 (JP)**

(72) Inventor: **YAMAMOTO, Keisuke**
**Kobe-shi Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE TREAD**

(57) An object of the present invention is to provide a tire which is good in the balance between its durability and blow resistance. The tire having a tread comprises a first layer forming a tread surface and a second layer adjacent to the radially inner side of the first layer, wherein the first layer is composed of a rubber composition comprising a rubber component comprising a styrene-butadiene rubber, and a resin component, and the second layer is formed of a rubber composition comprising a rubber component comprising an isoprene rubber, a styrene-butadiene rubber and a butadiene rubber, and a resin component.

# FIG. 2

**Description**

TECHNICAL FIELD

The present invention relates to a tire which is good in the balance between its grip performance and blow resistance.

BACKGROUND ART

Microbubbles of air in the tread rubber are inflated by the heat generated by the rubber due to repeated high speed traveling of the vehicle, causing deterioration of the rubber into a spongy shape. This phenomenon is called blowing of tire, or blowout. When a tire blow out, the grip performance of the tire is significantly reduced, and the tire wears out rapidly. In order to prevent such blowout, a tire with reduced heat generation are sometimes used.

Also, in order to improve the grip performance of a high performance tire, there are attempts to replace the softening agent partially or entirely with a liquid polymer. However, there are problems such as insufficient crosslinking, occurrence of blowout due to increased heat, and lowered wear resistance.

In Patent Document 1, a hydrogenated liquid polymer is used to make grip performance and wear resistance compatible, however, compatibility between grip performance and blow resistance can still be expected to improve. Also, there is a problem that partial hydrogenation of a liquid polymer is quite costly as it is an advanced technology.

PRIOR ART DOCUMENT

Patent Document

Patent Document 1: JP 2005-225946 A

SUMMARY OF THE INVENTION

PROBLEM TO BE SOLVED BY THE INVENTION

An object of the present invention is to provide a tire which is good in the balance between its durability and blow resistance.

MEANS TO SOLVE THE PROBLEM

The inventors found out that in a tread comprising a first layer forming a tread surface (typically a cap tread) and a second layer adjacent to the radially inner side of the first layer (typically a base tread or under tread), when the tread has a specified compounding ratio of rubber components composing the first layer and the second layer, the first layer and the second layer have good adhesiveness, improving the durability of the tire, and also improving the blow resistance, and achieved the present invention.

Particularly, the present invention relates to:

[1] A tire having a tread comprising a first layer forming a tread surface and a second layer adjacent to the radially inner side of the first layer, wherein
the first layer is composed of a rubber composition comprising a rubber component comprising a styrene-butadiene rubber, and a resin component, and
the second layer is composed of a rubber composition comprising a rubber component comprising an isoprene rubber, a styrene-butadiene rubber and a butadiene rubber, and a resin component.
[2] The tire of the above [1], wherein the ratio of a thickness t2 of the second layer to a thickness t1 of the first layer (t2/t1) is 5/95 to 60/40.
[3] The tire of the above [1] or [2], wherein the resin component content based on 100 parts by mass of a rubber component composing the first layer is greater than the resin component content based on 100 parts by mass of a rubber component composing the second layer
[4] The tire of any one of the above [1] to [3], wherein the styrene-butadiene rubber content in 100% by mass of a rubber component composing the first layer is greater than the styrene-butadiene rubber content in 100% by mass of a rubber component composing the second layer.
[5] The tire of any one of the above [1] to [4], wherein the rubber compositions composing the first layer and the second layer contain a filler, and the filler content based on 100 parts by mass of a rubber component composing the first layer is greater than the filler content based on 100 parts by mass of a rubber component composing the second layer.

[6] The tire of any one of the above [1] to [5], wherein the styrene-butadiene rubber content in 100% by mass of a rubber component composing the second layer is not less than 50% by mass.

[7] The tire of any one of the above [1] to [6], wherein the rubber composition composing the second layer comprises a liquid polymer.

[8] The tire of any one of the above [1] to [7], wherein the rubber composition composing the second layer comprises a petroleum resin.

[9] The tire of any one of the above [1] to [8], wherein the styrene-butadiene rubber content in 100% by mass of a rubber component composing the first layer is not less than 50% by mass.

EFFECTS OF THE INVENTION

According to the present invention, in a tread comprising a first layer forming a tread surface (typically, a cap tread) and a second layer adjacent to the radially inner side of the first layer (typically, a base tread or under tread), when the tread has a specified compounding ratio of rubber components composing the first layer and the second layer, a tire being good in durability and blow resistance is provided. Also, in a preferred aspect, the grip performance is improved, too.

BRIEF DESCRIPTION OF THE DRAWINGS

Fig. 1 is a sectional view of a part of a tire according to one embodiment of the present disclosure
Fig. 2 is an expanded sectional view of a part of a tread of the tire of Fig. 1.

EMBODIMENT FOR CARRYING OUT THE INVENTION

A tire of one embodiment of the present disclosure has a tread comprising a first layer forming a tread surface and a second layer adjacent to the radially inner side of the first layer, wherein the first layer is composed of a rubber composition comprising a rubber component comprising a styrene-butadiene rubber, and a resin component, and the second layer is composed of a rubber composition comprising a rubber component comprising an isoprene rubber, a styrene-butadiene rubber and a butadiene rubber, and a resin component. Here, the ratio of a thickness t2 of the second layer to a thickness t1 of the first layer (t2/t1; hereinafter, also referred to as "gauge ratio") is preferably 5/95 to 50/50.

A tire of the present disclosure may be improved in durability and blow resistance with the following mechanisms. For improving the adhesiveness between the first layer and the second layer, a styrene-butadiene rubber and a resin component are blended in the both layers, thereby the durability is improved. In addition, taking into consideration that the styrene-butadiene rubber and resin component increase heat generation, the blending amounts of the styrene-butadiene rubber and resin component in the second layer are relatively reduced and a low exothermic natural rubber and butadiene rubber are additionally blended in the second layer to lower the heat build-up of the second layer, thereby the heat build-up of the whole tread. As a result, the blow resistance can be improved.

In the following, a manufacturing process of tire that includes manufacturing the rubber composition of one embodiment of the present disclosure is described in detail. However, the following description is an example for explaining the present invention, and is not intended to limit a technical range of the present invention within the range of the description. It is noted that in the description "to" is used to show a range of values including the values of the extremities.

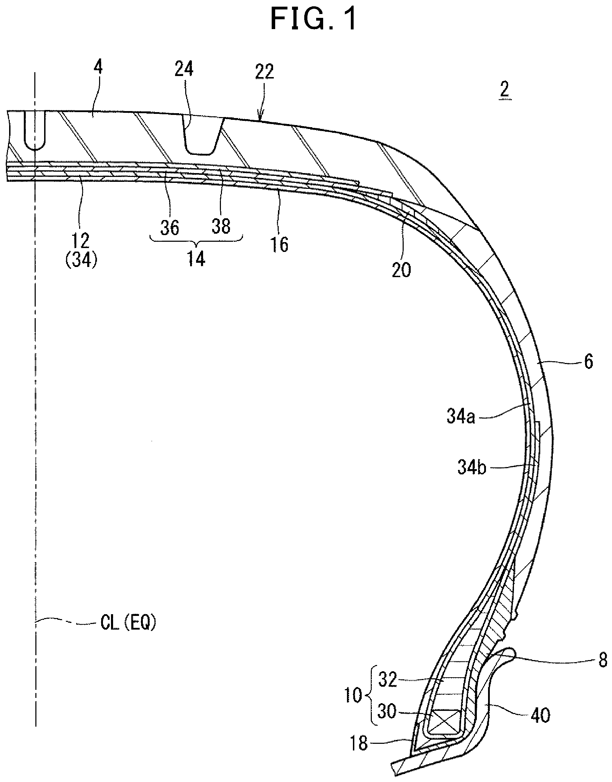

Fig. 1 shows a tire of one embodiment of the present disclosure, which is not limiting the invention. Fig. 1 shows a part of a cross section perpendicular to the circumferential direction of the tire. In Fig. 1, the vertical direction corresponds to the radial direction of the tire, the horizontal direction corresponds to the axial direction of the tire, and the direction perpendicular to the paper corresponds to the circumferential direction of the tire. In Fig. 1, a chain line CL shows the tire equatorial plane. The tire has a symmetry shape with respect to the equatorial plane except for the tread pattern.

The tread assumes a radially outwardly convex shape. The tread forms a tread surface for coming into contact with a road surface. The tread is provided with a groove, which forms a tread pattern. Although not shown in Fig. 1, The tread comprises a plurality of layers.

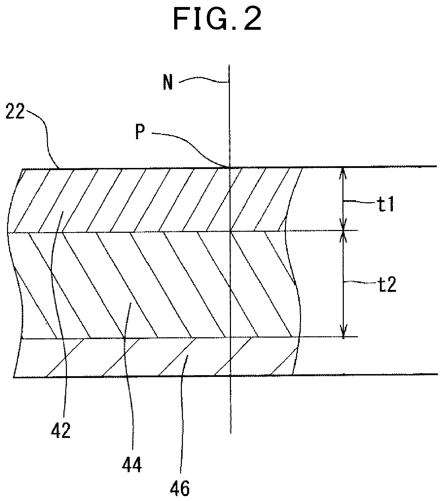

Fig. 2 is an expanded sectional view showing a part of the tread of the tire of Fig. 1. Fig. 2 shows an enlarged view of the part of the tread of Fig. 1 where no grooves are formed on the tread surface. In Fig. 2, the vertical direction corresponds to the radial direction of the tire, the horizontal direction corresponds to the axial direction of the tire direction perpendicular to the paper corresponds to the circumferential direction of the tire.

As shown in the figures, the tread of the tire comprises a first layer and a second layer, wherein the outer surface of the first layer forms a tread surface, and the second layer is adjacent to the inner side of the first layer. The first layer typically corresponds to a cap tread. The second layer typically corresponds to a base tread or under tread. Also, as far as the object of the present invention is met, there may be one, two or more rubber layers between the second layer and the outer layer of the belt.

In Fig. 2, a bidirectional arrow t1 shows the thickness of first layer and a bidirectional arrow t2 shows the thickness of the second layer. Fig. 2 shows an arbitrary point on the tread surface where no grooves are formed as a symbol P. The line shown by a symbol N is a line (a normal line) passing through the point P and perpendicular to the tangent plane at the point P. In the detail description, the thicknesses t1 and t2 are measured along the normal line N starting from the point P a position on the tread surface where no grooves exist.

The gauge ratio, t2/t1, is, from the viewpoint of blow resistance, preferably not less than 5/95, more preferably not less than 8/92, further preferably not less than 10/90, particularly preferably not less than 12/88. Also, from the viewpoint of grip performance, it is preferably not more than 60/40, more preferably not more than 55/45, further preferably not more than 50/50, particularly preferably not more than 40/60.

In the present disclosure, the thickness t1 of the first layer is not particularly limited and suitably set in accordance with the above-mentioned range of the gauge ratio, and it is, from the viewpoint of grip performance, preferably not less than 1.0 mm, more preferably not less than 1.5 mm, and from the viewpoint of blow resistance, preferably not more than 6.0 mm, more preferably not more than 5.5 mm.

In the present disclosure, thickness t2 of the second layer is not particularly limited and suitably set in accordance with the above-mentioned range of the gauge ratio, and it is, from the viewpoint of blow resistance, preferably not less than 0.4 mm, more preferably not less than 0.5 mm, further preferably not less than 0.6 mm, particularly preferably not less than 0.7 mm, and from the viewpoint of grip performance, preferably not more than 2.7 mm, more preferably not more than 2.5 mm, further preferably not more than 2.0 mm, particularly preferably not more than 1.5 mm.

In the present disclosure, unless otherwise stated, dimensions and angles of members of a tire are measured when the tire is rimmed in the normal rim with the tire inflated to the normal pressure. No load is applied to the tire during measurement. It is noted that in the detailed description, the term "normal rim" means a rim that is specifically specified by the standard system including a detailed description on which the tire is based, for example, a standard rim for JATMA, "Design Rim" for TRA, and "Measuring Rim" for ETRTO. In the detailed description, the term "normal pressure" means an air pressure that is specifically specified by the standard; the highest air pressure for JATMA, the maximum value shown in the table "TIRE LOAD LIMITS AT VARIOUS COLD INFLATION PRESSURES" for TRA, and "INFLATION PRESSURE" for ETRTO.

[First layer of the tread]

As mentioned above, the tread first layer is composed of a rubber composition comprising a rubber component comprising a styrene-butadiene rubber, and a resin component.

<Rubber component>

The rubber composition composing the first layer comprises a styrene-butadiene rubber (SBR) as a rubber component. Also, it preferably comprises a butadiene rubber (BR) and an isoprene rubber.

(SBR)

The SBR is not particularly limited, and examples thereof include a solution polymerized SBR (S-SBR), an emulsion polymerized SBR (E-SBR), a modified SBR of those (a modified S-SBR, a modified E-SBR). Examples of the modified SBR include a SBR with a modified terminal and/or main chain, and a modified SBR coupled by a tin, silicon compound or the like (a condensate, one with a branched structure, and the like). Among those, an S-SBR and a modified SBR are preferable. In addition, a hydrogenated product of these SBRs (a hydrogenated SBR) may also be used. These SBRs may be used alone, or may be used in combination of two or more thereof.

Examples of the S-SBR that may be used in the present disclosure include S-SBRs manufactured and sold by JSR Corporation, Sumitomo Chemical Co., Ltd., Ube Industries, Ltd., Asahi Kasei Corporation, ZS Elastomers Co., Ltd and the like.

A styrene content of the SBR is, from the viewpoint of grip performance and wear resistance, preferably not less than 10% by mass, more preferably not less than 15% by mass, further preferably not less than 20% by mass. Also, from the viewpoint of temperature dependence of grip performance and blow resistance, the styrene content of the SBR is preferably not more than 60% by mass, more preferably not more than 55% by mass, further preferably not more than 50% by mass. It is noted that in the detailed description, the styrene content of the SBR is calculated by $^1$H-NMR

measurement.

The vinyl bonding amount of the SBR is, from the viewpoint of securing reactivity with silica, rubber strength and wear resistance, preferably not less than 10 mol%, more preferably not less than 15 mol%, further preferably not less than 20 mol%. Also, the vinyl bonding amount of the SBR is, from the viewpoint of preventing from increasing temperature dependence, wet grip performance, elongation at break, and wear resistance, preferably not more than 70 mol%, more preferably not more than 65 mol%, further preferably not more than 60 mol%. It is noted that in the detailed description, the vinyl bonding amount (1,2-bonded butadiene unit amount) of SBR is measured by infrared absorption spectrometry.

The weight-average molecular weight (Mw) of the SBR is, from the viewpoint of grip performance and blow resistance, preferably not less than 200,000, more preferably not less than 250,000, further preferably not less than 300,000. Also, from the viewpoint of uniformity of cross linking, the weight-average molecular weight of the SBR is preferably not more than 2000,000, more preferably not more than 1800,000, further preferably not more than 1500,000. It is noted that in the detailed description, the weight-average molecular weight of the SBR can be obtained by standard polystyrene conversion based on a measurement from a gel permeation chromatography (GPC) (GPC-8000 series manufactured by Tosoh Corporation, detector: differential refractometer, column: TSKGEL SUPERMALTIPORE HZ-M manufactured by Tosoh Corporation).

A content of the SBR in 100% by mass of a rubber component composing the first layer is, from the viewpoint of grip performance and blow resistance, preferably not less than 50% by mass, more preferably not less than 60% by mass, further preferably not less than 65% by mass, particularly preferably not less than 70% by mass. Also, the upper limit of the SBR content in the rubber component is not particularly limited and may be 100% by mass.

(BR)

The BR is not particularly limited, and those common in the tire industry may be used, such as a BR having a content of cis-1,4 bond of less than 50% by mass (a low-cis BR), a BR having a content of cis-1,4 bond of not less than 90% by mass (a high-cis BR), a rare-earth butadiene rubber (a rare-earth BR) synthesized using a rare-earth element catalyst, a BR comprising syndiotactic polybutadiene crystals (an SPB-containing BR), a modified BR (a high-cis modified BR, low-cis modified BR)

Examples of the high-cis BRs include BR1220 manufactured by ZEON CORPORATION, BR130B, BR150B and BR150L manufactured by Ube Industries, Ltd., R730 manufactured by JSR Corporation and the like. When the rubber component comprises a high-cis BR, low temperature characteristics and wear resistance can be improved. Examples of the rare-earth BRs include BUNA-CB25 manufactured by Lanxess K.K. and the like.

An example of the SPB-containing BR is not one in which 1,2-syndiotactic polybutadiene crystals are simply dispersed in the BR, but one in which 1,2-syndiotactic polybutadiene crystals are chemically bonded with the BR and dispersed therein. Examples of such SPB-containing BR include VCR-303, VCR-412 and VCR-617 manufactured by Ube Industries, Ltd. and the like.

Examples of a modified BR include a modified BR (tin modified BR) obtained by performing polymerization of 1,3-butadiene with a lithium initiator and then adding a tin compound, and further having the molecular terminals bonded with a tin-carbon bond, a butadiene rubber (modified BR for silica) having an alkoxysilane condensate compound in an active terminal thereof and the like. Examples of such modified BRs include BR1250H (tin-modified), S-modified polymer (modified for silica) manufactured by ZS Elastomers Co., Ltd and the like.

The weight-average molecular weight (Mw) of the BR is, from the viewpoint of grip performance and wear resistance, preferably not less than 300,000, more preferably not less than 350,000, further preferably not less than 400,000. Also, from the viewpoint of uniformity of cross linking, it is, preferably not more than 2000,000, more preferably not more than 1000,000. It is noted that the weight-average molecular weight of the BR can be obtained by standard polystyrene conversion based on a measurement from a gel permeation chromatography (GPC) (GPC-8000 series manufactured by Tosoh Corporation, detector: differential refractometer, column: TSKGEL SUPERMALTPORE HZ-M manufactured by Tosoh Corporation).

When the rubber component composing the first layer comprises the BR, the content thereof in 100% by mass of a rubber component is, from the viewpoint of grip performance, preferably not more than 50% by mass, more preferably not more than 40% by mass, further preferably not more than 30% by mass, particularly preferably not more than 20% by mass. Also, when the BR is contained, the lower limit of the BR content is not particularly limited, and, for example, can be not less than 1% by mass, not less than 3% by mass, not less than 5% by mass, not less than 10% by mass, not less than 15% by mass.

(Isoprene rubber)

As the isoprene rubber, those common in the tire industry such as isoprene rubber (IR) and natural rubber may be used. The natural rubber here includes, in addition to unmodified natural rubbers (NR), modified natural rubbers such as an epoxydized natural rubber (ENR), a hydrogenated natural rubber (HNR), a deproteinized natural rubber (DPNR), an ultra pure natural rubber (UPNR), a grafted natural rubber. These rubbers may be used alone, or may be used in combination of two or more thereof.

The NR is not particularly limited, and those that are common in the tire industry may be used, including SIR20, RSS#3, TSR20, and the like.

When the rubber component composing the first layer comprises the isoprene rubber (preferably a natural rubber, more preferably an unmodified natural rubber (NR)), the content thereof in 100% by mass of a rubber component is, from the viewpoint of grip performance, preferably not more than 50% by mass, more preferably not more than 40% by mass, further preferably not more than 30% by mass, particularly preferably not more than 20% by mass. Also, when the isoprene rubber is contained, the lower limit of the isoprene rubber content is not particularly limited, and, for example, can be not less than 1% by mass, not less than 3% by mass, not less than 5% by mass, not less than 10% by mass, not less than 15% by mass.

(Other rubber components)

As the rubber component according to the present disclosure, other rubber components than the above-mentioned SBR, BR and isoprene rubbers may be contained. As such rubber components, a crosslinkable rubber component that is common in the tire industry may be used, including a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), an isobutylene - isoprene rubber (IIR), an ethylene - propylene rubber, a polynorbornene rubber, a silicone rubber, a chlorinated polyethylene rubber, a fluororubber (FKM), an acrylic rubber (ACM), an epichlorohydrin rubber, and the like. These rubber components may be used alone, or may be used in combination of two or more thereof.

<Filler>

The rubber composition composing the first layer preferably comprises a carbon black and/or silica as a filler.

(Carbon black)

As the carbon black, those common in the rubber industry may be used, including GPF, FEF, HAF, ISAF, SAF, and the like. One of those types of carbon black may be used alone, or may be used in combination of two or more thereof.

The nitrogen adsorption specific surface area ($N_2SA$) of the carbon black is, from the viewpoint of elongation at break, preferably not less than 50 $m^2/g$, more preferably not less than 70 $m^2/g$. Also, from the viewpoint of fuel efficiency and processability, it is preferably not more than 200 $m^2/g$, more preferably not more than 150 $m^2/g$. It is noted that the $N_2$ SA of the carbon black is a value measured in accordance with JIS K 6217-2 "Carbon black for rubber industry - Fundamental characteristics - Part 2: Determination of specific surface area - Nitrogen adsorption methods - Single-point procedures"

The dibutyl phthalate (DBP) oil absorption of the carbon black is, from the viewpoint of reinforcing property, preferably not less than 30 mL/ 100g, more preferably not less than 50 mL/ 100g. Also, from the viewpoint of fuel efficiency and processability, it is preferably not more than 400 mL/ 100g, more preferably not more than 350 mL/100g. It is noted that the dibutyl phthalate (DBP) oil absorption of the carbon black is a value measured in accordance with JIS K 6221.

When the rubber composition composing the first layer comprises the carbon black, the content thereof is, from the viewpoint of grip performance, preferably not less than 5 parts by mass, more preferably not less than 10 parts by mass, further preferably not less than 20 parts by mass, particularly preferably not less than 40 parts by mass based on 100 parts by mass of a rubber component. Also, the upper limit of the carbon black content is not particularly limited, from the viewpoint of fuel efficiency and wear resistance, and the content of the carbon black is preferably not more than 150 parts by mass, more preferably not more than 140 parts by mass, further preferably not more than 130 parts by mass based on 100 parts by mass of a rubber component.

(Silica)

The silica is not particularly limited, and, for example, those common in the tire industry may be used, including a silica prepared by a dry method (an anhydrous silica), and a silica prepared by a wet method (a hydrous silica). Among those, a silica prepared by a wet method is preferable because it comprises many silanol groups. Silica may be used alone, or may be used in combination of two or more thereof.

The nitrogen adsorption specific surface are ($N_2$ SA) of the silica is, from the viewpoint of fuel efficiency and wear resistance, preferably not less than 140m$^2$/g, more preferably not less than 170m$^2$/g, further preferably not less than 200m$^2$/g. Also, from the viewpoint of fuel efficiency and processability, it is preferably not more than 350m$^2$/g, more preferably not more than 300m$^2$/g, further preferably not more than 250m$^2$/g. It is noted that in the detailed description, the N$_2$ SA of the silica is a value measured by BET method in accordance with ASTM D3037-93.

When the rubber composition composing the first layer comprises the silica, the content thereof is, from the viewpoint of wet grip performance, preferably not less than 5 parts by mass, more preferably not less than 10 parts by mass, further preferably not less than 20 parts by mass based on 100 parts by mass of a rubber component. Also, from the viewpoint of wear resistance, it is preferably not more than 150 parts by mass, more preferably not more than 130 parts by mass, further preferably not more than 110 parts by mass, particularly preferably not more than 90 parts by mass based on 100 parts by mass of a rubber component.

The total content of the silica and the carbon black is, from the viewpoint of wear resistance, preferably not less than 40 parts by mass, more preferably not less than 50 parts by mass, further preferably not less than 60 parts by mass based on 100 parts by mass of a rubber component. Also, from the viewpoint of fuel efficiency and elongation at break, it is preferably not more than 180 parts by mass, more preferably not more than 160 parts by mass, further preferably not more than 140 parts by mass based on 100 parts by mass of a rubber component .

The silica is preferably used together with a silane coupling agent. The silane coupling agent is not particularly limited, and any silane coupling agent that has been conventionally used with silica in the rubber industry may be used. Examples of the silane coupling agent include a silane coupling agent having a sulfide group such as bis(3-triethoxysilyl) disulfide, and bis(3-triethoxysilyl) tetrasulphido; a silane coupling agent having a mercapto group such as 3-mercaptopropyl trimethoxy silane, 3-mercaptopropyltriethoxysilane, 2-mercaptoethyltrimethoxysilane, 2-mercaptoethyltriethoxysilane, NXT-Z30, NXT-Z45, NXT-Z60, NXT-Z100 manufactured by Momentive Performance Materials Inc., and Si363 manufactured by Evonik Degussa; a silane coupling agent having a thioester group such as 3-octanoylthio-1-propyltriethoxysilane, 3-hexanoylthi- 1-propyltriethoxysilane, and 3-octanoylthio-1-propyltrimethoxysilane; a silane coupling agent having a vinyl group such as vinyltriethoxysilane, and vinyltrimethoxysilane; a silane coupling agent having an amino group such as 3-aminopropyltriethoxysilane, 3-aminopropyltrimethoxysilane, and 3-(2-aminoethy) aminopropyltriethoxysilane; a glycidoxy-based silane coupling agent such as γ-glycidoxypropyltriethoxysilane, and γ-glycidoxypropyltrimethoxysilane; a nitro-based silane coupling agent such as 3-nitropropyltrimethoxysilane, and 3-nitropropyltriethoxysilane; and a chloro-based silane coupling agent such as 3-chloropropyl trimethoxy silane, and 3-chloropropyl triethoxy silane. Among those, a silane coupling agent having a sulfide group, a silane coupling agent having a mercapto group, and a silane coupling agent having a thioester group are preferable, and a silane coupling agent having a mercapto group is more preferable. One type of these silane coupling agents may be used alone, or may be used in combination of two or more thereof.

When the rubber composition composing the first layer comprises the silane coupling agent, the content thereof is, for higher dispersibility of the silica, preferably not less than 0.5 parts by mass, more preferably not less than 1.0 parts by mass, further preferably not less than 2.0 parts by mass, particularly preferably not less than 4.0 parts by mass based on 100 parts by mass of a rubber component. Also, for preventing reduced wear resistance, it is preferably not more than 20 parts by mass, more preferably not more than 12 parts by mass, further preferably not more than 10 parts by mass, particularly preferably not more than 9.0 parts by mass based on 100 parts by mass of a rubber component.

Fillers other than carbon black and silica may be used as a filler. Such filler is not particularly limited, and, for example, fillers commonly used in the rubber industry, such as aluminum hydroxide, alumina (aluminum oxide), calcium carbonate, talc, clay, and others may be used. These fillers can be used alone or may be used in combination of two or more thereof.

<Resin component>

The rubber composition composing the first layer comprises an adhesive resin as a resin component. Examples of the adhesive resin include those commonly used in the tire industry, including a petroleum resin, a terpene resin, a rosin resin, a phenolic resin, a coumarone resin, and these may be used alone, or may be used in combination of two or more thereof. By adding such resin component, a rubber composition composing the first layer and the rubber component composing the second layer exhibit good adhesiveness. Among those, a petroleum resin is suitable used.

The petroleum resin is not particularly limited, and examples thereof include an aliphatic petroleum resin, an aromatic petroleum resin, and an aliphatic-aromatic copolymeric petroleum resin, and these may be used alone, or may be used in combination of two or more thereof. As the aliphatic petroleum resin, a resin (also referred to as a C5 type petroleum resin) obtained by cationic polymerization of unsaturated monomers of isoprene, cyclopentadiene and the like, which are petroleum fractions corresponding to C4-5 (C5 fraction) may be used. As the aromatic petroleum resin, a resin (also referred to as a C9 type petroleum resin) obtained by cationic polymerization of monomers of vinyltoluene, alkylstyrene, indene, and the like, which are petroleum fractions corresponding to C8-10(C9 fraction) may be used. As the aliphatic-aromatic copolymeric petroleum resin, a resin obtained by copolymerization of the above-mentioned C5 fraction and C9 fraction (also referred to as a C5C9 type petroleum resin) is used. Also, ones obtained by hydrogenation of the above-mentioned petroleum resins may be used. Among those, a C5C9 type petroleum resin is suitably used.

As the C5C9 type petroleum resin, commercial products may be used, such as PRG-80 and PRG-140 manufactured by LUHUA; G-100 manufactured by Qilong; and PetroTac (registered trademark) 60, PetroTac 70, PetroTac 90, PetroTac 100, PetroTac 100V, and PetroTac 90HM manufactured by Tosoh Corporation

A terpene resin has an SP value lower than other adhesive resins such as an aliphatic petroleum resin, an aromatic petroleum resin, a phenolic resin, a coumarone-indene resin, a rosin resin, which is in between an SBR (SP value: 8.9) and a BR (SP value: 8.2), and is preferable from the viewpoint of compatibility with a rubber component. Among those, a terpene styrene resin is suitably used, because it has a particularly good compatibility with both an SBR and a BR, making sulfur more dispersible in the rubber component.

Polyterpene resin is a resin made from at least one selected from terpene compounds such as $\alpha$-pinene, $\beta$-pinene, limonene, dipentene. Terpene phenol resin is a resin made from an above-said terpene compound and a phenolic compound. Terpene styrene resin is a resin made from an above-said terpene compound and styrene. The polyterpene resin and terpene styrene resin may be a resin on which a hydrogenation treatment is performed (a hydrogenated polyterpene resin, a hydrogenated terpene styrene resin). The hydrogenation treatment to the terpene resin can be performed by a well-known method, and commercially available hydrogenated resins may be used.

One type of the examples of terpen resin may be used alone, or may be used in combination of two or more thereof. In the present disclosure, a commercially available terpene resin may be used. Examples of such commercially available terpene resin include those manufactured and sold by YASUHARA CHEMICAL CO., LTD., and others.

The rosin resin is not particularly limited, and examples thereof include
a natural resin rosin and a rosin-modified resin which is obtained by modifying a natural resin rosin by hydrogenation, disproportionation, dimerization, esterification, and the like.

The phenolic resin is not particular limited, and examples thereof include a phenol-formaldehyde resin, an alkylphenol-formaldehyde resin, an alkylphenol-acetylene resin, and an oil-modified phenol-formaldehyde resin.

Coumarone resin is a resin mainly composed of coumarone, and examples thereof include a coumarone resin, a coumarone-indene resin, a copolymer resin mainly composed of coumarone, indene, and styrene.

A content of the resin component is, from the viewpoint of adhesion performance and grip performance, preferably not less than 0.1 parts by mass, more preferably not less than 0.5 parts by mass, further preferably not less than 1.0 parts by mass, particularly preferably not less than 2.0 parts by mass based on 100 parts by mass of a rubber component. Also, from the viewpoint of wear resistance and grip performance, it is preferably not more than 20 parts by mass, more preferably not more than 15 parts by mass, further preferably not more than 12 parts by mass based on 100 parts by mass of a rubber component.

The softening point of the resin component is, from the viewpoint of grip performance, preferably not more than 160°C, more preferably not more than 145°C, further preferably not more than 130°C. Also, the softening point of the resin component is, from the viewpoint of grip performance, preferably not less than 20°C, more preferably not less than 35°C, further preferably not less than 50°C. It is noted that the softening point of the resin is one specified in JIS K6220-1: 2001 and is a temperature at the time when the ball has dropped in the measurement with the ring and ball softening point measuring device. Although Koresin (softening point: 145°C, available from BASF), which is used preferably in a tire for racing is good in grip performance, but a problem with strong tackiness with equipment is apt to arise. However, the branched alkane used herein exhibits good metal mold releasability.

The weight-average molecular weight (Mw) of the resin component is, for less volatility and better grip performance, preferably not less than 300, more preferably not less than 400, further preferably not less than 500. Also, the Mw is preferably not more than 15000, more preferably not more than 10000, further preferably not more than 8000.

The SP value of the resin component is, for better compatibility with a rubber component (especially with an SBR), preferably in the range of 8 to 11, more preferably in the range of 8 to 10, further preferably in the range of 8.3 to 9.5. By using a resin having an SP value within the above-mentioned ranges, the compatibility with an SBR and BR is increased, and the wear resistance and elongation at break can be improved.

<Other compounding agents>

In addition to the above-mentioned components, other compounding components commonly used in the tire industry, for example, an oil, a liquid polymer, a wax, a processing aid, an antioxidant, a stearic acid, a zinc oxide, a vulcanizing agent such as sulfur, a vulcanization accelerator and the like can be optionally compounded in the rubber composition in one embodiment of the present disclosure.

Examples of the oil include mineral oils such as an aromatic oil, a process oil, a paraffin oil, and the like. Among those, it is preferable to use a process oil to reduce loads on the environment.

When rubber composition comprises an oil, the content thereof is, from the viewpoint of processability, preferably not less than 10 parts by mass, more preferably not less than 15 parts by mass, further preferably not less than 20 parts by mass based on 100 parts by mass of a rubber component. Also, from the viewpoint of wear resistance, it is preferably not more than 100 parts by mass, more preferably not more than 90 parts by mass, further preferably not more than 80 parts by mass based on 100 parts by mass of a rubber component. It is noted that in the detailed description, the oil content includes an oil amount contained in an oil extended rubber.

The above-mentioned liquid polymer is not particularly limited as far as it is a polymer that is in a liquid state at a normal temperature (25°C), and examples thereof include liquid diene-based polymers, such as a liquid styrene butadiene copolymer (a liquid SBR), a liquid butadiene polymer (a liquid BR), a liquid isoprene polymer (a liquid IR), a liquid styrene isoprene copolymer (a liquid SIR). Among those, from the viewpoint of grip performance, liquid SBR is preferable. Regarding the molecular weight of the liquid polymer, the polystyrene conversion weight-average molecular weight measured by gel permeation chromatography (GPC) is preferably $1.0 \times 10^3$ to $2.0 \times 10^5$.

When rubber composition comprises a liquid polymer, the content thereof is, from the viewpoint of grip performance, preferably not less than 5 parts by mass, more preferably not less than 10 parts by mass, further preferably not less than 15 parts by mass based on 100 parts by mass of a rubber component. Also, from the viewpoint of wear resistance, it is preferably not more than 80 parts by mass, more preferably not more than 70 parts by mass, further preferably not more than 60 parts by mass, particularly preferably not more than 40 parts by mass based on 100 parts by mass of a rubber component.

When rubber composition comprises a wax, the content thereof is, from the viewpoint of weather resistance of the rubber, preferably not less than 0.5 parts by mass, more preferably not less than 1 part by mass based on 100 parts by mass of a rubber component. Also, from the viewpoint of whitening of the tire due to blooming, preferably not more than 10 parts by mass, more preferably not more than 5 parts by mass based on 100 parts by mass of a rubber component.

Examples of the processing aid include a fatty acid metal salt, a fatty amide, an amide ester, a silica surface active agent, a fatty acid ester, a mixture of a fatty acid metal salt and an amide ester, a mixture of a fatty acid metal salt and fatty amide. These may be used alone, or may be used in combination of two or more thereof. Among those, a fatty acid metal salt, an amide ester, a mixture of a fatty acid metal salt and an amide ester or fatty amide are preferable, and a mixture of a fatty acid metal salt and a fatty amide is particularly preferable. Particularly, examples thereof include fatty acid soap based processing aids such as EF44 and WB16manufactured by Schill+Seilacher GmbH.

When rubber composition comprises a processing aid, the content thereof is, for exhibiting improvement effect in processability, preferably not less than 0.5 parts by mass, more preferably not less than 1 part by mass based on 100 parts by mass of a rubber component. Also, from the viewpoint of wear resistance and breaking strength, it is preferably not more than 10 parts by mass, more preferably not more than 8 parts by mass based on 100 parts by mass of a rubber component.

The antioxidant is not particularly limited, and examples thereof include compounds such as amine-based compounds, quinoline-based compounds, quinone-based compounds, phenol-based compounds, imidazole-based compounds and antioxidants such as carbamic acid metal salt, and phenylenediamine antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine, and quinoline antioxidants such as 2,2,4-trimethyl-1,2-dihydroquinolin polymer, and 6-ethoxy-2,2,4-trimethyl-1,2-dihydroquinolin are preferable. These antioxidants may be used alone, or may be used in combination of two or more thereof.

When the rubber composition comprises an antioxidant, the content thereof is, from the viewpoint of ozone crack resistance of the rubber, preferably not less than 0.5 parts by mass, more preferably not less than 1 part by mass based on 100 parts by mass of a rubber component. Also, from the viewpoint of wear resistance and wet grip performance, it is preferably not more than 10 parts by mass, more preferably not more than 5 parts by mass based on 100 parts by mass of a rubber component.

When the rubber composition comprises a stearic acid, the content thereof is, from the viewpoint of processability, preferably not less than 0.5 parts by mass, more preferably not less than 1 part by mass based on 100 parts by mass of a rubber component. Also, from the viewpoint of vulcanization rate, it is preferably not more than 10 parts by mass, more preferably not more than 5 parts by mass based on 100 parts by mass of a rubber component.

When the rubber composition comprises a zinc oxide, the content thereof is, from the viewpoint of processability, preferably not less than 0.5 parts by mass, more preferably not less than 1 parts by mass based on 100 parts by mass of a rubber component. Also, from the viewpoint of wear resistance, it is preferably not more than 10 parts by mass, more preferably not more than 5 parts by mass based on 100 parts by mass of a rubber component.

As the vulcanizing agent, sulfur is suitably used. As the sulfur, powdery sulfur, oil-treated sulfur, precipitated sulfur, colloidal sulfur, insoluble sulfur, highly dispersible sulfur, and the like may be used.

When the rubber composition comprises sulfur as a vulcanizing agent, the content thereof is, for securing sufficient vulcanization reaction and obtaining good grip performance and wear resistance, preferably not less than 0.5 parts by mass, more preferably not less than 1.0 parts by mass based on 100 parts by mass of a rubber component. Also, from the viewpoint of deterioration, it is preferably not more than 5.0 parts by mass, more preferably not more than 4.0 parts by mass, further preferably not more than 3.0 parts by mass based on 100 parts by mass of a rubber component.

Examples of vulcanizing agents other than sulfur include a vulcanizing agent containing a sulfur atom such as TACKIROL V200 manufactured by Taoka Chemical Co., Ltd., DURALINK HTS (1,6-hexamethylene-sodium dithiosulfate dehydrate) manufactured by Flexsys, KA9188 (1,6-bis(N,N'-dibenzylthiocarbamoyldithio)hexane) manufactured by LANXESS K.K. and the like, an organic peroxide such as a dicumyl peroxide and the like.

The vulcanization accelerator is not particularly limited, and examples thereof include sulfonamide-, thiazole-, thiuram-, thiourea-, guanidine-, dithiocarbamate-, aldehyde amine- or aldehyde ammonia-, imidazoline-, and xanthate-based vulcanization accelerators. Among those, for more suitably obtaining desired results, sulfonamide-based vulcanization accelerators and dithiocarbamate-based vulcanization accelerators are preferable.

Examples of the sulfonamide-based vulcanization accelerators include CBS (N-cyclohexyl-2-benzothiazolylsulfenicamide), TBBS (N-t-butyl-2-benzothiazolylsulfenicamide), N-oxyethylene-2-benzothiazolylsulfenicamide, N,N'-diisopropyl-2-benzothiazolylsulfenicamide, and N,N-dicyclohexyl-2-benzothiazolylsulfenicamide. Examples of the thiazole-based vulcanization accelerators include 2-mercaptobenzothiazole, and dibenzothiazolyl disulfide. Examples of the thiuram-based vulcanization accelerators include tetramethylthiuram monosulphide, tetramethylthiuram disulfide, and tetrabenzylthiuram disulfide (TBzTD). Examples of the guanidine-based vulcanization accelerators include diphenyl guanidine (DPG), di-o-tolylguanidine, o-tolylbiguanidine. Examples of the dithiocarbamate-based vulcanization accelerators include zinc dibutyldithiocarbamate, zinc dibenzyldithiocarbamate, sodium dibutyldithiocarbamate, copper dimethyldithiocarbamate, ferric dimethyldithiocarbamate, and tellurium diethyldithiocarbamate. These may be used alone, or may be used in combination of two or more thereof.

When the rubber composition comprises the vulcanization accelerator, the content thereof is preferably not less than 1 part by mass, more preferably not less than 2 parts by mass based on 100 parts by mass of a rubber component. Also, the content of vulcanization accelerator is preferably not more than 8 parts by mass, more preferably not more than 7 parts by mass, further preferably not more than 6 parts by mass based on 100 parts by mass of a rubber component. When the content of the vulcanization accelerator is within the above-mentioned range, breaking strength and elongation at break tend to be secured.

[Second layer of the tread]

As mentioned, the second layer of the tread is composed of a rubber composition comprising a rubber component comprising an isoprene rubber, a styrene-butadiene rubber and a butadiene rubber, and a resin component.

The second layer, which lies in the central part of a tire total gauge, is, among the tire members, a part which becomes hottest due to heat accumulation. In the present disclosure, a second layer having less amounts of a filler and a resin component than a first layer and being low in heat generation is arranged so that the heat generation of the whole tread is reduced and the blow resistance is improved.

The rubber component composing the second layer comprises an isoprene rubber, a styrene-butadiene rubber (SBR) and a butadiene rubber (BR) as a rubber component. With this configuration, the first layer and the second layer exhibit good adhesiveness.

As the isoprene rubber, BR, SBR, and other rubber components, the same components as in the rubber composition composing the first layer of the tread can be suitably used in the same manner.

A content of the isoprene rubber (preferably natural rubber, more preferably, unmodified natural rubber (NR)) in 100% by mass of the rubber component composing the second layer is, from the viewpoint of securing adhesiveness with the first layer, preferably not more than 70% by mass, more preferably not more than 60% by mass. Also, when the isoprene rubber is contained, the lower limit of the isoprene rubber content is not particularly limited, and, for example, can be not less than 1% by mass, not less than 5% by mass, not less than 10% by mass.

A content of the SBR in 100% by mass of the rubber component composing the second layer is, from the viewpoint of securing adhesiveness with first layer, preferably not less than 40% by mass, more preferably not less than 50% by mass, further preferably not less than 60% by mass. Also, the upper limit of the SBR content in the rubber component is not particularly limited, and, for example, it can be not more than 99% by mass, not more than 95% by mass, not more than 90% by mass, not more than 85% by mass, not more than 80% by mass. It is noted that from the viewpoint of grip performance, the styrene-butadiene rubber content based on 100 parts by mass of the rubber component composing the first layer is preferably greater than the styrene-butadiene rubber content in 100% by mass of the rubber component composing the second layer.

A content of the BR in 100% by mass of the rubber component composing the second layer is, from the viewpoint of grip performance, preferably not more than 50% by mass, more preferably not more than 40% by mass, further preferably not more than 30% by mass, particularly preferably not more than 20% by mass. Also, when the BR is contained, the lower limit of the BR content is not particularly limited, and, for example, can be not less than 1% by mass, not less than 3% by mass, not less than 5% by mass, not less than 10% by mass, not less than 15% by mass.

<Filler>

The rubber component composing the second layer preferably comprises carbon black and/or silica as a filler. When the rubber component comprises silica, it also preferably comprises a silane coupling agent, as well. As the carbon black, silica, silane coupling agent, and other fillers, the same one as in the rubber composition composing the tread first layer can be suitably used in the same manner. It is noted that from the viewpoint of grip performance, the filler content based on 100 parts by mass of the rubber component composing the first layer is preferably greater than the filler content based on 100 parts by mass of the rubber component composing the second layer.

<Resin component>

The rubber component composing the second layer comprises an adhesive resin as a resin component. As the adhesive resin, the same one as in the rubber composition composing the first layer of the tread can be suitably used in the same manner, and a petroleum resin and terpene resin is preferable, and C5-C9 type petroleum resin is more preferable. It is noted that from the viewpoint of grip performance, the resin component content based on 100 parts by mass of a rubber component composing the first layer is preferably greater than the resin component content in 100% by mass of a rubber component composing the second layer, as mentioned above.

It is preferably that the total content of styrene-butadiene rubber and resin component based on 100 parts by mass of the rubber component composing the first layer is greater than the total content of styrene-butadiene rubber and resin component based on 100 parts by mass of the rubber component composing the second layer. Specifically, when the styrene-butadiene rubber content (parts by mass) and the resin component content (parts by mass) based on 100 parts by mass of the rubber component composing the first layer are set as A1 and B1, respectively, and the styrene-butadiene rubber content (parts by mass) and the resin component content (parts by mass) based on 100 parts by mass of the rubber component composing the second layer are set as A2 and B2, respectively, the following equation (1) is satisfied:

$$A1+B1 > A2+B2 \cdots \ (1)$$

<Other compounding agents>

In addition to the above-mentioned components, other compounding components commonly used in the tire industry, for example, an oil, a liquid polymer, a wax, a processing aid, an antioxidant, a stearic acid, a zinc oxide, a vulcanizing agent such as sulfur, a vulcanization accelerator and the like can be optionally compounded in the rubber composition composing the second layer. As the above-mentioned compounding agent, the same one as in the rubber composition composing the tread first layer can be suitably used in the same manner. It is noted that as a liquid polymer, a liquid IR is suitably used.

The rubber composition according to the present disclosure can be manufactured by a known method. The rubber composition can be manufactured, for example, by a method of kneading the above-mentioned components other than the vulcanizing agent and the vulcanization accelerator with a generally well-known kneading machine used in the rubber industry such as a Banbury mixer, a kneader or an open roll and then adding the vulcanizing agent and the vulcanization accelerator, followed by further kneading and then conducting vulcanization, or by other method.

[Tire]

A tire of the present disclosure comprises a tread comprising the above-mentioned first layer and second layer, and whether it is a pneumatic tire or a non-pneumatic tire does not matter. Also, examples of the pneumatic tire include tires for a passenger car, truck/bus, motorcycle, and a high-performance tire. It is noted that the high-performance tire herein means a tire especially good in grip performance and is a concept including a racing tire used in racing vehicles.

A tire comprising a tread comprising the above-mentioned first layer and a second layer can be manufacture by ordinary method with the above-mentioned rubber composition. Specifically, the above-mentioned components are blended based on a rubber component as necessary to obtain an unvulcanized rubber composition, which is in turn subjected to extrusion processing to the shape of the tread, laminated together with other tire members on a tire building machine, and formed by a usual forming method into an unvulcanized tire. Then this unvulcanized tire is subjected to press heating in a vulcanizer to produce a tire.

EXAMPLE

The present invention is explained with reference to examples; however, the present invention it not to be limited the examples.

The chemicals used in examples and comparative examples are as follows.

NR: TSR20

SBR: Tufdene 4850 manufactured by Asahi Kasei Corporation (an unmodified S-SBR, Mw: 350000, styrene content: 40% by mass, vinyl content: 46 mol%, containing 50 parts by mass of oil based on 100 parts by mass of rubber solid content)

BR: UBEPOL BR150B manufactured by Ube Industries, Ltd (a high-cis BR, cis content: 97% by mass, trans content: 2% by mass, vinyl content: 1% by mass)

Carbon black: SHOBLACK N330 manufactured by Cabot Corporation ($N_2SA$: 75m$^2$/g, DBP oil absorption amount: 102 mL/100g)

Silica: ULTRASIL VN3 manufactured by Evonik Degussa GmbH ($N_2SA$: 175m$^2$/g, average primary particle size: 15nm)

Silane coupling agent: NXT-Z45 manufactured by Momentive Performance Materials Inc. (a silane coupling agent having mercapto group)

Adhesive resin 1: PetroTac 100V manufactured by Tosoh Corporation (a C5C9 type petroleum resin, softening point: 96°C, Mw: 3800, SP value: 8.3)

Adhesive resin 2: YS resin TO125 manufactured by Yasuhara Chemical Co., Ltd. (terpene styrene resin, softening point: 125°C, Mw: 800, SP value: 8.7)

Liquid SBR: L-SBR820 manufactured by Kuraray Co., Ltd.

Liquid IR: LIR-50 manufactured by Kuraray Co., Ltd.

Oil: VivaTec 500 (TDAEoil) manufactured by H&R Co., Ltd. Antioxidant: Antigene 6C (N-(1,3-dimethylbutyl)-N'-phenyl-p-phenylenediamine) manufactured by Sumitomo Chemical Co., Ltd.

Wax: SUNNOC N manufactured by Ouchi Shinko Chemical Industrial Co., Ltd.

Stearic acid: stearic acid "Tsubaki" manufactured by NOF CORPORATION

Zinc oxide: two kinds of zinc oxide manufactured by Mitsui Mining & Smelting Co., Ltd.

Sulfur: powdery sulfur manufactured by Karuizawa Iou Kabushiki Kaisha

Vulcanization accelerator 1: Sanceler NS-G ((N-(tert-butyl)-2-benzothiazolesulfenamide) manufactured by Sanshin Chemical Industory co., Ltd

Vulcanization accelerator 2: Nocceler ZTC (zinc dibenzyldithiocarbamate) manufactured by Ouchi Shinko Chemical Industrial Co., Ltd.

Vulcanization accelerator 3: Nocceler CZ (N-cyclohexyl-2-benzothiazolyl sulfenamide) manufactured by Ouchi Shinko Chemical Industrial Co., Ltd.

(Examples and Comparative Examples)

According to the compounding formulations shown in Table 1 and 2, the chemicals other than the sulfur and vulcanization accelerators were kneaded with a 1.7 L Banbury mixer manufactured by Kobe Steel, Ltd. Then, the sulfur and vulcanization accelerators were added to the obtained kneaded products, and kneaded further, using an open roll to obtain unvulcanized rubber compositions. The obtained unvulcanized rubber compositions were molded in the forms of a cap tread (first layer) and a base tread (second layer) and laminated with other tire members to form unvulcanized tires, which were then vulcanized at 170°C to obtain test tires (205/65R15).

An unvulcanized rubber composition for a cap tread was laid over with an unvulcanized rubber composition for a base tread, and they were press-vulcanized at 170°C for 15 minutes to obtain a vulcanization-adhered rubber composition. Upon vulcanization, a sheet of cellophane was put between the rubber compositions at a position 60 mm from the end to make a holding part for the testing machine. An adhesion performance test was conducted in accordance with JIS K 6256 (Peeling test for cloth and vulcanized rubber) on the rubber composition formed by vulcanized adhesion of the obtained cap rubber and base rubber. A test piece was produced by cutting rubber sheet of the rubber composition formed by vulcanized adhesion of the cap rubber and base rubber into 25mm width. This test piece was peeled at a rate of 50 mm/min, and its peel strength was represented in an index with a reference comparative example (Comparative Example 1 in Table 3, Comparative Example 4 in Table 4, and Comparative Example 7 in Table 5) being set as 100. Those with greater adhesion performance indexes show better durability. Test results are shown in Tables 3-5.

<Blow resistance test>

With each test tire, 10-lap vehicle drive was conducted at a test course (about 5km for a lap) with a dry asphalt road surface. After the drive, the tires were dismantled and the occurrence of blow in a cross section of the tread was observed, which was then represented in an index with a reference comparative example (Comparative Example 1 in Table 3, Comparative Example 4 in Table 4, Comparative Example 7 in Table 5) being set as 100. Those with greater indexes are better in blow resistance. Test results are shown in Tables 3-5.

<Grip performance test>

The above test tires were mounted to a 750 cc motorcycle, and on a test course with a dry asphalt road surface, the length of time the vehicle takes to come to a stop after the brakes are applied while driving at a speed of 100 km/h was measured. The results were shown in indexes, and the larger the index, better the grip performance. It is noted that, the indexes are obtained by the following equation. Test results are shown in Tables 3-5. The grip performance index is preferably not less than 80, more preferably not less than 85.

$$(\text{Grip performance index}) = (\text{the length of time to stop of reference}$$
$$\text{comparative example})/(\text{the length of time to stop in each compounding}$$
$$\text{example}) \times 100$$

The total performance of adhesion performance and blow resistance (an average value of adhesion performance and blow resistance) is, with the target performance value being 102 or greater, preferably not less than 103, more preferably not less than 104.

Table 1

| Composition of first layer | Examples | | | | | |
|---|---|---|---|---|---|---|
| | A1 | A2 | A3 | A4 | A5 | A6 |
| Compounding amount (part by mass) | | | | | | |
| NR | - | - | - | - | 100 | - |
| SBR | 150 | 105 | 150 | 150 | - | 150 |
| BR | - | 30 | - | - | - | - |
| Carbon black | 120 | 120 | 10 | 120 | 120 | 120 |
| Silica | - | - | 90 | - | - | - |
| Silica coupling agent | - | - | 7.2 | - | - | - |
| Adhesive resin 1 | 20 | 20 | 20 | - | 20 | - |
| Adhesive resin 2 | - | - | - | 20 | - | - |
| Liquid SBR | 20 | 20 | 20 | 20 | 20 | 20 |
| Oil | 10 | 10 | 10 | 10 | 10 | 10 |
| Antioxidant | 2.5 | 2.5 | 2.5 | 2.5 | 2.5 | 2.5 |
| Wax | 1.0 | 1.0 | 1.0 | 1.0 | 1.0 | 1.0 |
| Stearic acid | 2.0 | 2.0 | 2.0 | 2.0 | 2.0 | 2.0 |
| Zinc oxide | 4.0 | 4.0 | 4.0 | 4.0 | 4.0 | 4.0 |
| Sulfur | 1.0 | 1.0 | 1.0 | 1.0 | 1.0 | 1.0 |
| Vulcanization accelerator 1 | 3.0 | 3.0 | 3.0 | 3.0 | 3.0 | 3.0 |
| Vulcanization accelerator 2 | 1.0 | 1.0 | 1.0 | 1.0 | 1.0 | 1.0 |

Table 2

| Composition of second layer | Examples | | | | | | |
|---|---|---|---|---|---|---|---|
| | B1 | B2 | B3 | B4 | B5 | B6 | B7 |
| Compounding amount (part by mass) | | | | | | | |
| NR | 30 | 30 | 30 | 30 | 30 | - | 60 |
| SBR | 90 | 90 | 90 | 90 | 90 | 150 | - |
| BR | 10 | 10 | 10 | 10 | 10 | - | 40 |
| Carbon black | 50 | 50 | 10 | 50 | 50 | 50 | 50 |
| Silica | - | - | 90 | - | - | - | - |
| Silica coupling agent | - | - | 7.2 | - | - | - | - |
| Adhesive resin 1 | 5.0 | 25 | 5.0 | 5.0 | - | 5.0 | 5.0 |
| Liquid SBR | - | - | - | 10 | - | - | - |
| Oil | 5.0 | 5.0 | 5.0 | 5.0 | 5.0 | 5.0 | 5.0 |
| Antioxidant | 2.5 | 2.5 | 2.5 | 2.5 | 2.5 | 2.5 | 2.5 |
| Wax | 1.0 | 1.0 | 1.0 | 1.0 | 1.0 | 1.0 | 1.0 |
| Stearic acid | 1.5 | 1.5 | 1.5 | 1.5 | 1.5 | 1.5 | 1.5 |
| Zinc oxide | 4.0 | 4.0 | 4.0 | 4.0 | 4.0 | 4.0 | 4.0 |
| Sulfur | 1.0 | 1.0 | 1.0 | 1.0 | 1.0 | 1.0 | 1.0 |
| Vulcanization accelerator 3 | 3.0 | 3.0 | 3.0 | 3.0 | 3.0 | 3.0 | 3.0 |

Table 3

| | Examples | | | | | | | Comparative Examples | | |
|---|---|---|---|---|---|---|---|---|---|---|
| | 1 | 2 | 3 | 4 | 5 | 6 | 7 | 1 | 2 | 3 |
| Composition of first layer | A1 | A1 | A1 | A1 | A2 | A3 | A4 | A1 | A1 | A1 |
| Composition of second layer | B1 | B2 | B3 | B4 | B1 | B1 | B1 | B5 | B6 | B7 |
| t1 (mm) | 4.6 | 4.5 | 4.6 | 4.4 | 4.5 | 4.6 | 4.4 | 4.4 | 4.7 | 4.7 |
| t2 (mm) | 0.6 | 0.6 | 0.6 | 0.4 | 0.5 | 0.6 | 0.6 | 0.4 | 0.4 | 0.5 |
| Indexes | | | | | | | | | | |
| Adhesion performance | 114 | 113 | 98 | 117 | 106 | 94 | 121 | 100 | 100 | 90 |
| Blow resistance | 106 | 95 | 116 | 103 | 102 | 118 | 99 | 100 | 92 | 107 |
| Grip performance | 106 | 109 | 85 | 109 | 87 | 81 | 112 | 100 | 109 | 88 |

Table 4

| | Examples | | | | | | | Comparative Examples | | |
|---|---|---|---|---|---|---|---|---|---|---|
| | 8 | 9 | 10 | 11 | 12 | 13 | 14 | 4 | 5 | 6 |
| Composition of first layer | A1 | A1 | A1 | A1 | A2 | A3 | A4 | A1 | A1 | A1 |
| Composition of second layer | B1 | B2 | B3 | B4 | B1 | B1 | B1 | B5 | B6 | B7 |
| t1 (mm) | 3.4 | 3.3 | 3.4 | 3.3 | 3.4 | 3.4 | 3.5 | 3.4 | 3.5 | 3.5 |
| t2 (mm) | 1.4 | 1.4 | 1.4 | 1.5 | 1.5 | 1.4 | 1.4 | 1.5 | 1.5 | 1.5 |
| Indexes | | | | | | | | | | |
| Adhesion performance | 107 | 108 | 93 | 109 | 101 | 91 | 113 | 100 | 100 | 90 |
| Blow resistance | 108 | 98 | 118 | 106 | 105 | 120 | 102 | 100 | 92 | 107 |

(continued)

| Indexes | | | | | | | | | | |
| --- | --- | --- | --- | --- | --- | --- | --- | --- | --- | --- |
| Grip performance | 103 | 101 | 81 | 100 | 93 | 78 | 110 | 100 | 103 | 83 |

Table 5

| | Examples | | | | | | | Comparative Examples | | |
| --- | --- | --- | --- | --- | --- | --- | --- | --- | --- | --- |
| | 15 | 16 | 17 | 18 | 19 | 20 | 21 | 7 | 8 | 9 |
| Composition of first layer | A1 | A1 | A1 | A1 | A2 | A3 | A4 | A1 | A1 | A1 |
| Composition of second layer | B1 | B2 | B3 | B4 | B1 | B1 | B1 | B5 | B6 | B7 |
| t1 (mm) | 2.3 | 2.3 | 2.3 | 2.6 | 2.6 | 2.3 | 2.7 | 2.5 | 2.6 | 2.6 |
| t2 (mm) | 2.5 | 2.3 | 2.5 | 2.4 | 2.7 | 2.5 | 2.5 | 2.7 | 2.6 | 2.5 |
| Indexes | | | | | | | | | | |
| Adhesion performance | 101 | 114 | 88 | 106 | 98 | 87 | 105 | 100 | 100 | 89 |
| Blow resistance | 109 | 105 | 120 | 108 | 106 | 121 | 106 | 100 | 100 | 115 |
| Grip performance | 97 | 92 | 77 | 94 | 99 | 75 | 95 | 100 | 97 | 79 |

The results of Table 1 to Table 5 show that the tire of the present disclosure having a specified compounding ratio of rubber compositions composing the tread first layer and the tread second layer has improved total performance of durability and blow resistance. Also, the results also show that in a preferred aspect, the grip performance is improved, too.

List of Reference Signs

2    tire
4    tread
6    side wall
8    clinch
10   bead
12   carcass
14   belt
16   inner liner
18   chafer
20   cushion layer
22   tread surface
24   groove
30   core
32   apex
34   carcass ply
36   inner layer (of belt)
38   outer layer (of belt)
40   rim flange
42   first layer
44   second layer
46   rubber layer

**Claims**

1.  A tire having a tread comprising a first layer forming a tread surface and a second layer adjacent to the radially inner side of the first layer, wherein
the first layer is composed of a rubber composition comprising a rubber component comprising a styrene-butadiene rubber, and a resin component, and
the second layer is composed of a rubber composition comprising a rubber component comprising an isoprene rubber, a styrene-butadiene rubber and a butadiene rubber, and a resin component.

2. The tire according to claim 1, wherein the ratio of a thickness t2 of the second layer to a thickness t1 of the first layer (t2/t1) is 5/95 to 60/40.

3. The tire of claim 1 or 2, wherein the resin component content based on 100 parts by mass of a rubber component composing the first layer is greater than the resin component content based on 100 parts by mass of a rubber component composing the second layer.

4. The tire of any one of claims 1 to 3, wherein the styrene-butadiene rubber content in 100% by mass of a rubber component composing the first layer is greater than the styrene-butadiene rubber content in 100% by mass of a rubber component composing the second layer.

5. The tire of any one of claims 1 to 4, wherein the rubber compositions composing the first layer and the second layer comprises a filler, and the filler content based on 100 parts by mass of a rubber component composing the first layer is greater than the filler content based on 100 parts by mass of a rubber component composing the second layer.

6. The tire of any one of claims 1 to 5, wherein the styrene-butadiene rubber content in 100% by mass of a rubber component composing the second layer is not less than 50% by mass.

7. The tire of any one of claims 1 to 6, wherein the rubber composition composing the second layer comprises a liquid polymer.

8. The tire of any one of claims 1 to 7, wherein the rubber composition composing the second layer comprises a petroleum resin.

9. The tire according to any one of claims 1 to 8, wherein the styrene-butadiene rubber content in 100% by mass of a rubber component composing the first layer is not less than 50% by mass.

# FIG. 1

# FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005225946 A